# EUROPEAN PATENT SPECIFICATION

(11) **EP 2 748 061 B1**
(45) Date of publication and mention of the grant of the patent: **01.07.2015**
(21) Application number: 12794532.7
(22) Date of filing: 07.11.2012
(51) Int. Cl.: B63C 11/00, B63C 11/52

(54) **WORKSTATION FOR TRANSPORTING EQUIPMENT TO AN UNDERWATER POSITION**
ARBEITSPLATZ ZUM TRANSPORT EINER AUSRÜSTUNG AN EINE POSITION UNTER WASSER
POSTE DE TRAVAIL PERMETTANT DE TRANSPORTER DU MATÉRIEL JUSQU'À UNE POSITION SOUS-MARINE

(30) Priority: 09.11.2011 NL 2007756
(43) Date of publication of application: 02.07.2014
(73) Proprietor: IHC Holland IE B.V., 3361 EP Sliedrecht (NL)
(72) Inventor: APPELS, Mark, Johan, NL-2515 XT Den Haag (NL); VAN DER HARST, Cornelis, Jacobus, NL-3971 MN Driebergen-Rijsenburg (NL)
(74) Representative: Nederlandsch Octrooibureau
(86) International application number: PCT/NL2012/050781
(87) International publication number: WO 2013/070071

(56) References cited:
- GB-A- 2 009 290
- GB-A- 2 464 714
- US-A- 3 396 747
- US-A- 5 324 140

## Description

### TECHNICAL FIELD

The invention relates to a workstation for transporting and positioning equipment to an underwater position.

### BACKGROUND

Offshore divers are commonly used to perform certain tasks with respect to subsea structures, such as pipes, bases of platforms, wrecks, etc. The divers may be lowered to their working position in a pressurized diving bell. While deployed, the diving bell is connected to the vessel by a main umbilical through which the necessary supplies, amongst others: breathing gas, hot water, communication lines and electrics are transported to the bell. The bell is lowered and lifted by means of a hoisting cable. In addition, guide wires, connected to an anchor weight, stabilize the bell position at the requested depth.

Equipment may be lowered in a separate tool basket. The tool basket is attached to the vessel by a hoisting line to lower and lift the tool basket.

Also, a remotely operated vehicle (ROV) may be present to support the divers.

The divers may perform different kind of operations using different tools. Some tools need to be powered in order to be used. Powering these tools is done by providing an appropriate supply line from the vessel to the tool. Examples of such tools are:
- a cleaning tool, such as a water jetting tool, which is powered via a pressurized water supply line which is fed with pressurized water from the vessel,
- a welding/cutting tool, which is powered via gas and electric supply lines which are fed from the vessel,
- a hydraulic power tool, such as a grinder, which are powered via a hydraulic supply and return line which is fed with hydraulic fluid from the vessel.

It will be understood that many lines, cables, umbilicals, etc. are present in order to facilitate the divers while working. When the diver's umbilical or other lines become entangled, this could cause great risks for the divers and will at least reduce the efficiency of the diving operation.

In order to reduce the risk of entangling, the supply lines for the different tools are usually lowered one at the time, i.e. when a diver needs to use a specific tool, this tool is lowered via a guiding cable (i.e. downline) to the worksite. The supply line for this specific tool, which is stored on a winch at the vessel is let out (wind out) while the tool is lowered. Once the diver is finished using this specific tool and needs another tool, the first tool is lifted via the guiding cable, the associated supply line is pulled in by the winch, and a second tool is lowered while the supply line for this second tool is let out from its winch provided at the vessel. This is a time-consuming procedure.

Document GB 2 464 714, constitutes the closest prior art.

### SUMMARY

It is an object to be able to work in a more time-efficient way without comprising the safety of the divers.

Therefore, according to a first aspect, there is provided a workstation for transporting and positioning equipment to an underwater position, characterized in that the workstation comprises a tool and a supply line in order to power the tool, wherein the workstation comprises a supply line storage unit, such as a winch, for storing at least part of the supply line. The supply line may be with one end connected or connectable to the tool and with its other end connected or connectable to an umbilical which can cover the distance from the workstation to the vessel.

Such a workstation allows a more time efficient way of working, as the tool is permanently present in a nearby position of the diver. So, when the diver needs a tool, he can simply take the tool out of the workstation and use it. There is no need to lower the tool and the associated supply line from the vessel. In addition, when the diver is finished using the tool, the diver simply stores the tool at the workstation, the supply line on the winch and there is no need to hoist the tool with the associated supply line to the vessel before the job is completed. This provides a safe way of working as the length of loose supply line is relatively short, i.e. only covers the distance from the workstation to the working position.

According to an embodiment workstation comprises two or more tools and associated supply lines in order to power the respective tools, wherein the workstation comprises two or more supply line storage units, such as winches, for storing the different supply lines.

Again, each supply line may be with one end connected or connectable to the associated tool and with its other end connected or connectable to a combined umbilical which can cover the distance from the workstation to the vessel.

When two or more tools are provided on the workstation, the amount of loose cables and hoses in the vicinity of the diver is reduced while the diver has all tools readily at hand. Time loss for transferring tooling, hoses and other equipment from the surface is significantly reduced.

The diver can simply change tools by storing a tool at the workstation and getting another tool from the workstation. At the same time the length of the loose supply conduits is reduced since the supply lines only need to cover the distance from the workstation to the working position, while all the tools are connected to a single umbilical only. This provides a safe, comfort and time-efficient way of working.

According to an embodiment the workstation comprises a connector for connecting the supply lines to a combined umbilical. The umbilical may comprise two or more main supply lines connected or connectable to the respective supply lines stored on the different winches.

The respective supply lines may also be integrally formed with the main supply lines running through the combined umbilical. This umbilical may be supplied as part of the workstation.

The umbilical connects the workstation to a vessel.

According to an embodiment the main supply lines are connected or connectable to main supplies on the vessel. At the vessels' end of the umbilical the different main supplies lines are separated from each other and may be connected to different main supplies.

According to an embodiment the workstation comprises further equipment fixedly attached to the workstation which need to be powered and/or remotely controlled, the workstation comprising further lines associated with the further equipment to power and/or control the further equipment, which further lines are also connected or connectable to the umbilical. Examples of such equipment are lights, cameras and thrusters. The further lines may be connected or connectable to the combined umbilical via connector 80.

According to an embodiment the workstation comprises a working basket for storing equipment, spare parts and/or tools.

According to an embodiment the workstation comprises a resting facility for one or more divers.

According to an embodiment the workstation comprises a plurality of thrusters for dynamically controlling the position of the workstation in an underwater hanging position. Thrusters may be provided to move the workstation to a desired location or to dynamically position the working basket on a steady position. The workstation may comprise a control unit coupled to positioning sensors to determined changes in the position of the working basket and control the thrusters to at least partially counteract the determined changes.

According to an embodiment the workstation comprising supply line storage unit driving means to operate each supply line storage units to give out or take in supply line. The supply line storage unit may be winches and the driving means may be winch driving means to drive each winch. The winch driving means are arranged to drive the winch in two direction to help the diver to let out or pull in the supply lines.

### BRIEF DESCRIPTION OF THE DRAWINGS

Embodiments will now be described, by way of example only, with reference to the accompanying schematic drawings in which corresponding reference symbols indicate corresponding parts, and in which:

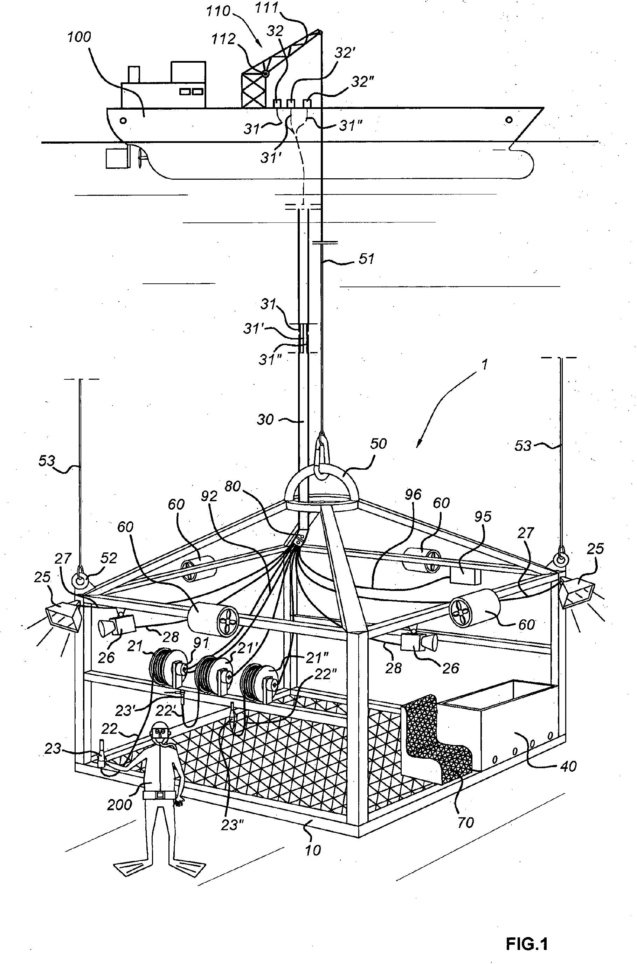

FIG. 1 schematically shows a workstation according to an embodiment.

The figures are meant for illustrative purposes only, and do not serve as restriction of the scope or the protection as laid down by the claims.

### DETAILED DESCRIPTION

Fig. 1 schematically depicts an embodiment and shows a subsea workstation 1 for diving operations which provides the divers with a toolbox, comprising two or more tools 23 which need to be powered in order to be used via a supply line 22. The subsea workstation 1 is connected to a vessel 100 via an umbilical 30 and one or more hoisting cables 51. The umbilical 30 comprises two or more main supply lines 31 via which the tools 23 can be powered. The umbilical 30 may further supply energy to other equipment on the workstation, such as lights 25, camera's 26 etc., which may be provided with their own supply lines 27, 28 which may run through the umbilical 30.

The workstation 1 comprises two or more supply line storage units 21, 21', 21", such as winches, spools or reels as shown in Fig. l,with respective supply lines 22, 22', 22" stored on them. The supply line storage units 21, 21', 21" are arranged to store supply lines 22, 22', 22", give out supply line and take in supply line.

The working position of the diver 200, which is preferably close to the workstation 1, can now simply take a desired tool 23, 23', 23" from the workstation 1, take it with him to the desired location while the corresponding winch 21, 21', 21" winds out the supply line 22, 22', 22" and start working. If the diver 200 needs another tool, he can simply swim to the workstation 1, store the first tool 23 on the workstation 1 while the supply line 22 is stored on the winch and take another tool 23'.

As it is difficult for the divers to exert a force, supply line storage unit driving means, such as winch driving means 91 for rotating the supply line storage units (e.g. winches) 21, 21', 21" may be provided to drive the supply line storage units (e.g. winches) 21, 21', 21" to let out or pull in the supply lines 22, 22', 22". The supply line storage unit driving means 91 may be powered via respective lines 92, which may also run via umbilical 30. The driving means 91 may be engines which are arranged to drive e.g. the winches 21, 21', 21" in two opposite rotating directions to let out and to pull in the supply lines 22, 22', 22".

The supply line storage driving means (winch driving means) 91 may be operated by the diver 200 or may be operated remotely from the vessel 100 or by a remote diver 200. The driving means 91 may therefore comprise a communication unit (not shown) which is arranged to communicate with a remote controller (not shown), for instance operated by the diver 200 or by an operator at the vessel 100. The communication between the controller and the communication unit may be wireless, or may be wired. In case the communication is wired and the controller is at the vessel, the respective lines 92 may comprise a communication line which runs via the umbilical 30.

The workstation 1 comprises a frame 10 to which all the parts of the workstation 1 are connected. The workstation 1 may comprise a hoisting member 50 to which a hoisting line 51 may be connected to lower and lift the workstation 1. The workstation 1 can be lowered and lifted by a crane 110 or manipulator positioned on the vessel 100. The crane 110 is preferably able to position the workstation 1 in the close vicinity of the working position of the diver 200.

The workstation 1 may comprise one or more, preferably at least two, connection members 52 for guide wires 53 to control the position of the workstation 1.

The workstation 1 may comprise a resting facility 70 to allow divers 200 to rest, one or more lights 25 to provide the working position with light, one or more camera's 26 to capture images of the working position and send the captured images to a remote location, such as the vessel 100. It will be understood that other and additional equipment may be present on the workstation 1.

The workstation 1 may comprise one or more of tools which need a supply line 22 to power the tool 23. The tools 23 may be handheld tools which can be carried and operated by a diver 200. Examples of such tools 23 are
- a water jetting tool,
- a welding/cutting tool,
- hydraulic power tool.

In the example shown in Fig. 1, one of each of these three different kind of tools 23 are present.

Each tool 23, 23', 23" is provided with an associated supply line 22, 22', 22" which is stored on an associated winch 21, 21', 21" which is provided on the workstation 1. The supply lines 22, 22', 22" are with one end connected to the respective tools 23, 23', 23" and with their other ends connected to the umbilical 30. Of course, the supply lines 22, 22', 22" may be formed as a one integral supply line running from the tool to the vessel.

So, the workstation 1 may comprise a water jetting tool with a nozzle 23, a pressurized water supply line 22 stored on a first winch 21, which is with a first end connected to the nozzle 23 and with a second end connected to the umbilical 30. A water jetting tool may be used for cleaning purposes. The umbilical 30 comprises a main pressurized water supply line 31 which is with a first end connected to a pressurized water supply 32 at the vessel 100 and with a second end connected to the second end of the pressurized water supply line 22 stored on the first winch 21.

The workstation 1 may comprise a welding or cutting tool, with a welding or cutting head 23', a gas (e.g. oxygen) and electric supply line 22' stored on a second winch 21', which is with a first end connected to the welding head 23' and with a second end connected to the umbilical 30. The umbilical 30 comprises a main gas supply line 31' which is with a first end connected to a gas supply 32' at the vessel 100 and with a second end connected to the second end of the gas supply line 22' stored on the second winch 21'.

The workstation 1 may comprise an hydraulic power tool 23", a hydraulic supply line 22" stored on a third winch 21" for supplying hydraulic fluid, which is with a first end connected to the hydraulic power tool 23" and with a second end connected to the umbilical 30. The umbilical 30 comprises a main hydraulic supply line 31" which is with a first end connected to a hydraulic supply 32" at the vessel 100 and with a second end connected to the second end of the hydraulic supply line 22" stored on the third winch 21". The hydraulic supply line 22'may be combined with a hydraulic return line in order to return hydraulic fluid to the vessel 100.

The workstation 1 may further comprise holding members (not shown) for holding and storing the tools 23, 23', 23" when not in use and the corresponding supply lines 22, 22', 22" are stored on the corresponding winches 21, 21', 21".

The different supply lines 22, 22', 22" may be connected or be connectable to the different main supply lines 31, 31', 31" by a connector 80. The connector 80 may be formed as part of the workstation 1 and may for instance be mounted to the frame 10 of the workstation 1. This allows disconnecting the umbilical 30 from the workstation 1 if needed, for instance when the workstation 1 is positioned on the deck of the vessel 100.

The workstation 1 may further comprise one or more thrusters 60 to control the position of the workstation 1, for instance to move the workstation 1 towards a working position or to dynamically control the position of the workstation 1 to counteract movements of the workstation 1 due to water currents and the like.

The workstation 1 may comprise a control unit 95 coupled to positioning sensors to determined changes in the position and/or orientation of the working basket 1 and control the thrusters 60 to at least partially counteract the determined changes. This will be explained in more detail below. The control unit 95 may control the thrusters 60 in a wireless way.

The thrusters 60 may be used to dynamically control a position and/or orientation of the workstation 1 to keep the workstation 1 at a steady position and orientation, in particular in a horizontal plane. This is in particular useful in case the workstation 1 is positioned in a hanging underwater position, i.e. does not rest on the ground, which makes the workstation 1 subjected to waves and water currents. The thrusters 60 may thus be used to provide the workstation 1 with dynamic positioning (dp) functionality.

The thrusters 60 may therefore be controlled by a control unit 95 which may comprise positioning sensors or kinematic sensors and is arranged to determine a change in position and/or orientation of the workstation based on measurements performed by the kinematic sensors and control the thrusters 60 to at least partially cancel these movements in order to keep the position and/or orientation of the workstation 1 steady. The positioning sensors or kinematic sensors may comprise one or more of an accelerometer, a gyroscope, a global positioning system.

The thrusters 60 may be orientated in a horizontal plane. The thrusters 60 may have an axial direction in which thrust can be provided in two directions. Different thrusters 60 may have different axial directions to control the position of the workstation in different directions. The thrusters 60 are therefore arranged to compensate for changes in position and/or orientation of the workstation 1 within the horizontal plane. The control unit 95 may control the thrusters 60 individually to provide a specific amount of thrust in a forward or rearward axial direction of the thrusters 60.

The thrusters 60 may also be mounted in a rotatable way to the frame 10. In such a case, the control unit 95 may be arranged to control the orientation of the different thrusters 60 individually and may be arranged to control the thrusters 60 individually to provide a specific amount of thrust in a forward or rearward axial direction of the thrusters 60.

The positioning sensors or kinematic sensors may also determine a change in the vertical position of the workstation 1. Data comprising such a change in the vertical position of the workstation 1 may be send (remotely or via a wire 96 as shown in Fig. 1 for instance running through the umbilical 30) to the crane 110. The crane 110 may dynamically compensate for such a change in the vertical position by lifting or lowering the crane arm 111 and/or by controlling a winch 112 to give out or pull in hoisting line 51.

It is noted that the aspect of the thrusters 60 can be used on any workstation 1 or tool basket, including workstations 1 or tool baskets with or without powered tools and without or without corresponding winches. So, there is provided a workstation 1 or toolbox for transporting equipment to an underwater position comprising a plurality of thrusters 60 for dynamically controlling the position of the working basket 1 in an underwater hanging position. The thrusters 60 may be controlled by a control unit 95 which is able to receive data from positioning sensors to determined changes in the position and/or orientation of the working basket 1 and control the thrusters 60 to at least partially counteract the determined changes.

Accordingly there is provided a method for deploying a workstation 1 or toolbox to an underwater hanging position, monitoring changes in position and/or orientation of the workstation 1 or toolbox and dynamically controlling thrusters provided on the workstation 1 or toolbox to at least partially compensate the determined changes to keep the workstation 1 or toolbox steady.

The descriptions above are intended to be illustrative, not limiting. It will be apparent to the person skilled in the art that alternative and equivalent embodiments of the invention can be conceived and reduced to practice, without departing from the scope of the claims set out below.

## Claims

1. Workstation (1) for transporting equipment to an underwater position, **characterized in that** the workstation (1) comprises a tool (23) and a supply line (22) in order to power the tool (23), wherein the workstation (1) comprises a supply line storage unit such as a winch (21) for storing at least part of the supply line (22).

2. Workstation (1) according to claim 1, wherein the workstation (1) comprises two or more tools (23, 23', 23 ") and associated supply lines (22, 22', 22") in order to power the respective tools (23, 23', 23"), wherein the workstation (1) comprises two or more supply line storage units such as winches (21, 21', 21 ") for storing the different supply lines (22, 22', 22").

3. Workstation (1) according to any one of the preceding claims, wherein the workstation comprises a connector (80) for connecting the supply lines (22, 22', 22") to a combined umbilical (30).

4. Workstation (1) according to claim 3, wherein the main supply lines (31, 31', 31") are connected or connectable to main supplies (32, 32', 32") on a vessel (100).

5. Workstation (1) according to any one of the preceding claims comprising further equipment fixedly attached to the workstation (1) which need to be powered and/or remotely controlled, the workstation (1) comprising further lines (27, 28) associated with the further equipment to power and/or control the further equipment, which further lines are also connected or connectable to the umbilical (30).

6. Workstation (1) according to any one of the preceding claims comprising a working basket (40) for storing equipment, spare parts and/or tools.

7. Workstation (1) according to any one of the preceding claims comprising a resting facility (70) for one or more divers (200).

8. Workstation (1) according to any one of the preceding claims comprising a plurality of thrusters (60) for dynamically controlling the position of the workstation (1) in an underwater hanging position.

9. Workstation (1) according to any one of the preceding claims comprising supply line storage units driving means (91) to operate each supply line storage units to give out or take in supply line.

## Patentansprüche

1. Arbeitsplatz (1) zum Transport einer Ausrüstung an eine Position unter Wasser, **dadurch gekennzeichnet, dass** der Arbeitsplatz (1) ein Werkzeug (23) sowie eine Versorgungsleitung (22) umfasst, um das Werkzeug (23) mit Strom zu versorgen, wobei der Arbeitsplatz (1) eine Versorgungsleitunglagereinheit umfasst, wie eine Winde (21), um zumindest einen Teil der Versorgungsleitung (22) zu lagern.

2. Arbeitsplatz (1) nach Anspruch 1, wobei der Arbeitsplatz (1) zwei oder mehrere Werkzeuge (23, 23', 23") sowie dazugehörige Versorgungsleitungen (22, 22', 22") umfasst, um die jeweiligen Werkzeuge (23, 23', 23") mit Strom zu versorgen, wobei der Arbeitsplatz (1) zwei oder mehrere Versorgungsleitunglagereinheiten, wie Winden (21, 21 ', 21 "), umfasst, um die unterschiedlichen Versorgungsleitungen (22, 22', 22") zu lagern.

3. Arbeitsplatz (1) nach einem der vorstehenden Ansprüche, wobei der Arbeitsplatz einen Verbinder (80) zum Verbinden der Versorgungsleitungen (22, 22', 22") zu einer zusammengefassten Speiseleitung (30) umfasst.

4. Arbeitsplatz (1) nach Anspruch 3, wobei die Hauptversorgungsleitungen (31, 31', 31") mit Hauptversorgungen (32, 32', 32") auf einem Schiff (100) verbunden oder verbindbar sind.

5. Arbeitsplatz (1) nach einem der vorstehenden Ansprüche, umfassend weitere Ausrüstung, die fest an dem Arbeitsplatz (1) angebracht ist, die mit Strom versorgt und/oder ferngesteuert werden muss, wobei der Arbeitsplatz (1) der weiteren Ausrüstung zugehörige weitere Leitungen (27, 28) umfasst, um die weitere Ausrüstung mit Strom zu versorgen und/oder zu steuern, wobei die weiteren Leitungen ebenso mit der Speiseleitung (30) verbunden oder verbindbar sind.

6. Arbeitsplatz (1) nach einem der vorstehenden Ansprüche, umfassend einen Arbeitskorb (40) zum Lagern von Ausrüstung, Ersatzteilen und/oder Werkzeugen.

7. Arbeitsplatz (1) nach einem der vorstehenden Ansprüche, umfassend eine Ruheeinrichtung (70) für einen oder mehrere Taucher (200).

8. Arbeitsplatz (1) nach einem der vorstehenden Ansprüche, umfassend eine Vielzahl von Strahlrudern (60) zum dynamischen Steuern der Position des Arbeitsplatzes (1) in einer hängenden Position unter Wasser.

9. Arbeitsplatz (1) nach einem der vorstehenden Ansprüche, umfassend Versorgungsleitunglagereinheiten-Antriebsmittel (91) zum Betätigen jeder Versorgungsleitunglagereinheit für das Abgeben oder Einholen der Versorgungsleitung.

## Revendications

1. Poste de travail (1) pour transporter un équipement vers une position sous-marine, **caractérisé en ce que** le poste de travail (1) comprend un outil (23) et une ligne d'alimentation (22) afin d'alimenter l'outil (23), le poste de travail (1) comprenant une unité de stockage de ligne d'alimentation telle qu'un treuil (21) pour stocker au moins une partie de la ligne d'alimentation (22).

2. Poste de travail (1) selon la revendication 1, dans lequel le poste de travail (1) comprend deux ou plus de deux outils (23, 23', 23") et lignes d'alimentation associées (22, 22', 22") afin d'alimenter les outils respectifs (23, 23', 23"), le poste de travail (1) comprenant deux ou plus de deux unités de stockage de ligne d'alimentation telles que des treuils (21, 21', 21") pour stocker les différentes lignes d'alimentation(22, 22', 22").

3. Poste de travail (1) selon l'une quelconque des revendications précédentes, dans lequel le poste de travail comprend un connecteur (80) pour connecter les lignes d'alimentation (22, 22', 22") à un câble ombilical combiné (30).

4. Poste de travail (1) selon la revendication 3, dans lequel les lignes d'alimentation principales (31, 31', 31") sont connectées ou peuvent être connectées aux alimentations principales (32, 32', 32") sur un navire (100).

5. Poste de travail (1) selon l'une quelconque des revendications précédentes comprenant un équipement supplémentaire relié de manière fixe au poste de travail (1), qui doit être alimenté et/ou commandé à distance, le poste de travail (1) comprenant des lignes supplémentaires (27, 28) associées à l'équipement supplémentaire pour alimenter et/ou commander l'équipement supplémentaire, lesquelles lignes supplémentaires sont également connectées ou peuvent être connectées au câble ombilical (30).

6. Poste de travail (1) selon l'une quelconque des revendications précédentes comprenant une nacelle de travail (40) pour stocker un équipement, des pièces de rechange et/ou des outils.

7. Poste de travail (1) selon l'une quelconque des revendications précédentes comprenant une installation de repos (70) pour un ou plusieurs plongeurs (200).

8. Poste de travail (1) selon l'une quelconque des revendications précédentes comprenant plusieurs poussoirs (60) pour commander dynamiquement la position du poste de travail (1) dans une position sous-marine de suspension.

9. Poste de travail (1) selon l'une quelconque des revendications précédentes comprenant des moyens d'entraînement d'unités de stockage de ligne d'alimentation (91) pour actionner chaque unité de stockage de ligne d'alimentation pour qu'elle distribue ou recueille une ligne d'alimentation.
